(19) **Europäisches Patentamt / European Patent Office / Office européen des brevets**

(11) **EP 4 198 674 B1**

(12) **FASCICULE DE BREVET EUROPEEN**

(45) Date de publication et mention de la délivrance du brevet:
**07.05.2025 Bulletin 2025/19**

(21) Numéro de dépôt: **22213715.0**

(22) Date de dépôt: **15.12.2022**

(51) Classification Internationale des Brevets (IPC):
*G05D 23/19* *(2006.01)*

(52) Classification Coopérative des Brevets (CPC):
**G05D 23/1917**

(54) **PROCÉDÉ DE SELECTION D'UN MODE DE PILOTAGE DE DISPOSITIFS PASSIFS DE RÉGULATION THERMIQUE D'UN BÂTIMENT**

VERFAHREN ZUR AUSWAHL EINES ANSTEUERMODUS FÜR PASSIVE THERMISCHE REGELUNGSVORRICHTUNGEN EINES GEBÄUDES

METHOD FOR SELECTING A DRIVING MODE FOR PASSIVE THERMAL REGULATION DEVICES OF A BUILDING

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **17.12.2021 FR 2113861**

(43) Date de publication de la demande:
**21.06.2023 Bulletin 2023/25**

(73) Titulaire: **Delta Dore**
**35270 Bonnemain (FR)**

(72) Inventeurs:
• **PLEVIN, Jacques**
**35270 Bonnemain (FR)**
• **BRUN, Adrien**
**38054 Grenoble Cedex 09 (FR)**
• **BERNAUD, Pierre**
**38054 Grenoble Cedex 09 (FR)**

(74) Mandataire: **Cabinet Le Guen Maillet**
**3, impasse de la Vigie**
**CS 71840**
**35418 Saint-Malo Cedex (FR)**

(56) Documents cités:
FR-A1- 3 015 708      FR-A1- 3 082 286
KR-B1- 101 905 308

**Description**

DOMAINE TECHNIQUE

La présente invention concerne le domaine de la régulation thermique d'un bâtiment et concerne en particulier un procédé de sélection, parmi deux modes de pilotage, d'un mode de pilotage de dispositifs de régulation thermique.

ETAT DE LA TECHNIQUE ANTERIEURE

La gestion de la régulation thermique d'un bâtiment se base généralement sur deux modes de régulation saisonniers, un premier mode de régulation adapté pour réguler thermiquement le bâtiment en saison estivale et un second mode de régulation adapté pour réguler thermiquement le bâtiment en saison hivernale.

Ainsi, le premier mode de régulation génère le pilotage d'ouvrants du bâtiment afin de favoriser la ventilation naturelle, autrement dit les transferts thermiques entre l'air extérieur et l'air intérieur du bâtiment, le pilotage de protections solaires afin de limiter les apports thermiques par rayonnement solaire, et éventuellement le pilotage d'un dispositif de climatisation. Le second mode de régulation génère le pilotage d'un système de chauffage et le pilotage des protections solaires afin de favoriser les apports thermiques par rayonnement solaire.

Toutefois, il existe des périodes transitoires entre la saison hivernale et la saison estivale pour lesquelles les fluctuations météorologiques peuvent être importantes, telles que des variations importantes de température ou des variations importantes de durées d'ensoleillement. Dans de telles périodes transitoires, aucun des modes de régulation saisonniers n'est adapté. En outre, une alternance entre le premier mode de régulation et le second mode de régulation génère une alternance de réchauffement et de refroidissement tout en consommant de l'énergie.

Il est alors souhaitable de pallier ces inconvénients de l'état de la technique.

Il est notamment souhaitable de fournir une solution qui permette de réguler thermiquement un bâtiment durant des périodes de fortes fluctuations météorologiques tout en limitant la consommation d'énergie utilisée pour assurer le refroidissement et le réchauffement du bâtiment.

Il est en outre souhaitable de fournir une solution qui soit facile à implémenter et qui fasse appel à des données aisément disponibles.

Il est enfin souhaitable de fournir une solution robuste et qui nécessite une faible puissance embarquée. Un document de l'état de l'art particulièrement pertinent est FR 3 015 708 A1.

EXPOSE DE L'INVENTION

Un objet de la présente invention est de proposer un procédé selon la revendication 1.

Le procédé comporte en outre de sélectionner le mode de pilotage pour lequel le critère de confort déterminé associé est représentatif de la plus grande sensation de confort.

Ainsi, il est possible de proposer une solution de régulation thermique du bâtiment facile à implémenter et qui permet de limiter la consommation d'énergie en période d'importantes fluctuations météorologiques. Il est en outre possible d'effectuer une régulation thermique du bâtiment optimale en choisissant, parmi deux modes de pilotages, le mode de pilotage qui permet d'obtenir la plus grande sensation de confort.

Selon un mode de réalisation particulier, déterminer l'ensemble des valeurs optimales de paramètres prédéfinis permettant de minimiser l'erreur de prévision comprend : considérer que l'erreur de prévision est minimisée lorsque l'erreur de prévision est inférieure à un critère prédéfini.

Selon un mode de réalisation particulier, déterminer l'ensemble des valeurs optimales permettant de minimiser l'erreur de prévision, est effectué par implémentation d'un calcul d'optimisation basé sur une méthode d'optimisation par essaims particulaires ou sur l'exploitation d'un algorithme génétique.

Selon l'invention, le modèle de prévision est fonction d'un premier paramètre prédéfini $\Phi$, caractéristique d'un déphasage, d'un deuxième paramètre prédéfini $\varepsilon$ correspondant à un facteur d'amortissement, l'estimation de la température intérieure $T_{int\,estim}$ à un instant $t_n$, situé entre l'instant initial $t_i$ et un instant final $t_f$, étant obtenue à partir d'une valeur de température intérieure $T_{int\,mes}$ connue à l'instant initial $t_i$, d'une valeur de température extérieure $T_{ext}$ connue ou estimée à l'instant initial $t_i$ et d'une valeur prévisionnelle de température extérieure $T_{ext}$ à l'instant $t_n$, selon :

$$T_{int\,estim1}(t_n) = T_{int\,mes}(t_i) + \frac{\varepsilon\,.\,T_{ext}(t_n + \Phi)}{T_{ext}(t_i)}$$

Ainsi, les données nécessaires au calcul de chaque séquence prévisionnelle sont aisément disponibles puisqu'elles comportent uniquement des valeurs de températures mesurées et des valeurs de températures issues d'un service externe de prévisions météorologiques. De plus, les paramètres prédéfinis caractéristiques respectivement d'un déphasage et d'un facteur d'amortissement permettent de caractériser le comportement thermique, par exemple l'inertie thermique, du bâtiment et ainsi d'obtenir une estimation plus précise de la température intérieure et de son évolution. En outre, la faible quantité d'inconnues dans le modèle de prévision limite les risques de divergence lors de l'implémentation du calcul d'optimisation et fournissent ainsi une solution de régulation thermique du bâtiment robuste et nécessitant une faible puissance embarquée.

Selon un mode de réalisation particulier, l'erreur de prévision est une erreur moyenne absolue entre les valeurs de températures intérieures mesurées $T_{int\ mes}(t)$ et les estimations de la température intérieure $T_{int\ estim}(t)$ obtenues, et s'écrit : $\sum_{t_i}^{t_f} \frac{|T_{int\ estim}(t) - T_{int\ mes}(t)|}{N}$ ; où N représente le nombre de valeurs de températures intérieures mesurées $T_{int\ mes}(t)$ sur l'intervalle temporel [$t_i$ ; $t_f$].

Selon un mode de réalisation particulier, le critère de confort est une durée entre l'instant initial $t_i$ et un instant auquel la séquence prévisionnelle franchit le seuil minimal ou le seuil maximal de température de confort pour la première fois.

Selon un mode de réalisation particulier, le critère de confort est inversement proportionnel à une surface entre la droite correspondant au seuil, minimal ou maximal, de température de confort qui est franchi par la séquence prévisionnelle, et la courbe représentant la séquence prévisionnelle, entre un instant de début $t_{deb}$ de franchissement dudit seuil de température de confort, et un instant de fin $t_{fin}$ de franchissement dudit seuil de température de confort.

Selon un mode de réalisation particulier, chaque dispositif de régulation thermique est un dispositif passif qui ne consomme pas d'énergie pour chauffer ou refroidir le bâtiment.

Ainsi, la régulation thermique du bâtiment peut être aisément effectuée tout en limitant la consommation d'énergie utilisée pour assurer le refroidissement et le réchauffement du bâtiment. Il est ainsi possible d'effectuer une régulation thermique du bâtiment à moindre coût tout en optimisant la sensation de confort.

L'invention concerne également un dispositif destiné à sélectionner un mode de pilotage de dispositifs de régulation thermique d'un bâtiment, parmi un premier mode de pilotage, accumulatif, et un second mode de pilotage, dissipatif, chaque dispositif de régulation thermique étant destiné à réguler la température d'air intérieure du bâtiment, dite température intérieure. Le dispositif comporte :

- des moyens pour obtenir, pour chacun des modes de pilotage, des estimations de la température intérieure en fonction de paramètres prédéfinis grâce à un modèle de prévision de la température intérieure,
- des moyens pour définir, pour chacun des modes de pilotage, une erreur de prévision représentative d'écarts entre des valeurs de températures intérieures mesurées et les estimations de la température intérieure obtenues, chaque écart étant défini à un instant auquel la température intérieure mesurée est déterminée lorsque ledit mode de pilotage est sélectionné, l'erreur de prévision étant fonction des paramètres prédéfinis,
- des moyens pour déterminer, pour chacun des modes de pilotage, un ensemble de valeurs optimales associé audit mode de pilotage, comportant une valeur associée à chaque paramètre prédéfini et permettant de minimiser l'erreur de prévision,
- des moyens pour déterminer, pour chacun des modes de pilotage, une séquence prévisionnelle associée audit mode de pilotage, la séquence prévisionnelle comportant des estimations de la température intérieure calculées, à partir d'un instant initial $t_i$, selon le modèle de prévision de la température intérieure en appliquant l'ensemble déterminé des valeurs optimales associé au mode de pilotage,
- des moyens pour déterminer, pour chacun des modes de pilotage, un critère de confort associé au mode de pilotage, représentatif d'une sensation de confort et caractérisant un franchissement d'un seuil minimal de température de confort et d'un seuil maximal de température de confort par les estimations de la séquence prévisionnelle,
- des moyens pour sélectionner le mode de pilotage pour lequel le critère de confort déterminé associé est représentatif de la plus grande sensation de confort.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus dans l'un quelconque de leurs modes de réalisation, lorsque ledit programme est exécuté par le processeur. L'invention concerne également un support de stockage d'informations stockant un tel programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un bâtiment dans lequel est implémenté un procédé de sélection d'un mode de pilotage ;

[Fig. 2] illustre schématiquement une phase d'apprentissage du procédé de sélection d'un mode de pilotage ;

[Fig. 3] illustre schématiquement une phase de sélection du procédé de sélection d'un mode de pilotage ; et

[Fig. 4] illustre schématiquement un exemple d'architecture matérielle d'une unité de contrôle implémentant le procédé de sélection d'un mode de pilotage.

EXPOSE DETAILLE DE MODES DE REALISATION

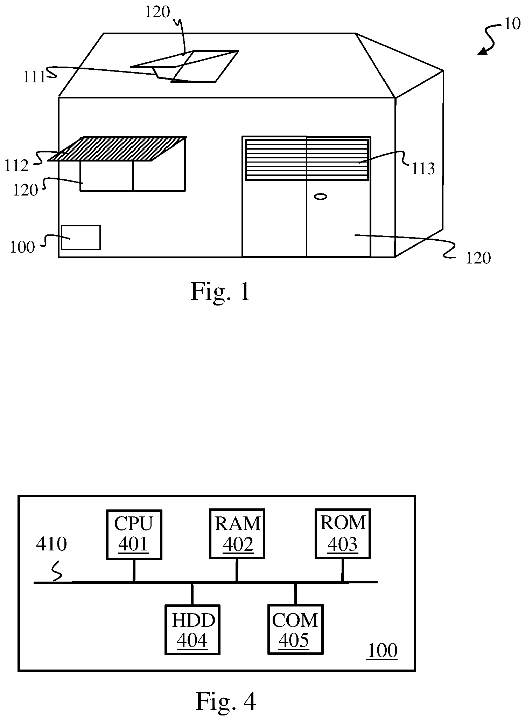

La Fig. 1 illustre ainsi schématiquement un bâtiment 10 dans lequel est implémenté un procédé de sélection d'un mode de pilotage de dispositifs de régulation thermique du bâtiment 10.

Le bâtiment 10 comporte des ouvrants 120 tels que des fenêtres ou baies vitrées. Le bâtiment 10 comporte en outre des dispositifs passifs 111, 112, 113 de régulation thermique. Chaque dispositif passif 111, 112, 113 peut être associé à un ouvrant. Un dispositif passif est par exemple un système motorisé d'ouverture 111 ou des dispositifs d'occultation solaire amovibles motorisés comme un store 113 ou un brise-soleil 112. Le bâtiment 10 peut en outre comporter des dispositifs actifs de régulation thermique.

Les dispositifs passifs 111, 112, 113 et les dispositifs actifs de régulation thermique contribuent à la régulation thermique du bâtiment 10 en favorisant le réchauffement et/ou le refroidissement du bâtiment 10. Les dispositifs actifs de régulation thermique, tels qu'un chauffage ou une climatisation consomment, lors de leur fonctionnement, de l'énergie fossile, électrique ou issue de la biomasse afin d'effectuer des actions permettant de réchauffer ou de refroidir le bâtiment 10.

Les dispositifs passifs 111, 112, 113 permettent d'assurer des transferts thermiques entre l'extérieur et l'intérieur du bâtiment 10 et/ou permettent de limiter des transferts thermiques entre l'air extérieur et l'air intérieur du bâtiment 10, permettant ainsi de chauffer, refroidir ou encore limiter le réchauffement ou le refroidissement du bâtiment 10. En d'autres termes, les dispositifs passifs 111, 112, 113 comportent des moyens configurés pour faciliter ou réduire les échanges thermiques entre l'intérieur et l'extérieur du bâtiment 10, par exemple par renouvellement d'air ou gestion des apports solaires. Ainsi, les dispositifs passifs 111, 112, 113 permettent de moduler des transferts thermiques entre l'extérieur et l'intérieur du bâtiment 10.

Les effets de réchauffement, de refroidissement, ou de limitation de réchauffement ou de refroidissement du bâtiment 10 sont obtenus, pour chaque dispositif passif 111, 112, 113, selon un contexte d'usage dudit dispositif passif 111, 112, 113 et pour un positionnement ou une orientation définis dudit dispositif passif 111, 112, 113. Ainsi, pour un positionnement défini ou une orientation définie, chaque dispositif passif 111, 112, 113 permet d'assurer ou de limiter des transferts thermiques entre l'extérieur et l'intérieur du bâtiment 10 sans consommer de l'énergie fossile, électrique ou issue de la biomasse.

Par exemple, le store 113 peut permettre, lorsqu'il est en position baissée, d'éviter une accumulation de chaleur dans le bâtiment 10. En revanche, lorsque le store 113 est relevé, le store 113 favorise le réchauffement du bâtiment 10 par rayonnement solaire à travers une surface vitrée, lorsque le contexte d'usage implique la présence de soleil. De manière similaire, le brise-soleil 112 permet de limiter ou de favoriser le réchauffement du bâtiment 10 selon sa position et selon l'orientation et l'inclinaison du soleil.

Selon un autre exemple, le système motorisé d'ouverture 111 peut entraîner, lorsqu'il ouvre et maintient l'ouvrant 120 associé ouvert, soit un réchauffement du bâtiment 10 si l'air extérieur est plus chaud que l'air intérieur du bâtiment 10, soit un refroidissement du bâtiment 10 si l'air extérieur est plus froid que l'air intérieur du bâtiment 10.

Le bâtiment 10 comporte en outre une unité de contrôle 100 destinée à piloter les dispositifs passifs 111, 112, 113.

L'unité de contrôle 100 implémente le procédé de sélection d'un mode de pilotage, parmi deux modes de pilotage : un mode accumulatif A et un mode dissipatif D. Le mode accumulatif A est configuré pour maximiser les apports thermiques extérieurs et minimiser les déperditions thermiques. Le mode dissipatif D est configuré pour minimiser les apports thermiques extérieurs et maximiser les déperditions thermiques. La sélection d'un mode de pilotage plutôt qu'un autre peut ainsi permettre de conserver une sensation de confort dans le bâtiment 10.

Selon un premier mode de réalisation, chacun des modes de pilotage accumulatif A et dissipatif D génère le pilotage des dispositifs passifs 111, 112, 113 et des dispositifs actifs de régulation thermique du bâtiment 10.

Selon un second mode de réalisation, chacun des modes de pilotage accumulatif A et dissipatif D génère uniquement le pilotage des dispositifs passifs 111, 112, 113 du bâtiment 10. Ainsi, les modes de pilotage accumulatif A et dissipatif D permettent d'effectuer une régulation thermique à moindre coût en exploitant de manière optimale l'inertie thermique du bâtiment, autrement dit la capacité de stockage thermique du bâtiment 10. Le mode accumulatif A vise alors à maximiser le stockage de chaleur dans le bâtiment 10 tandis que le mode dissipatif D vise à minimiser le stockage de chaleur dans le bâtiment 10 permettant ainsi de conserver la fraîcheur. La sélection d'un mode de pilotage plutôt qu'une autre peut alors permettre de conserver une sensation de confort dans le bâtiment 10 tout en évitant d'utiliser un dispositif actif de régulation thermique pour compenser les apports ou les pertes de chaleur résultant de fluctuations météorologiques externes.

Lorsque le mode accumulatif A est sélectionné, l'unité de contrôle 100 détermine pour chaque dispositif passif 111, 112, 113, en tenant compte du contexte météorologique et de l'orientation dudit dispositif passif, dans quelle position ledit dispositif passif 111, 112, 113 permet de maximiser les apports thermiques. Par exemple, l'unité de contrôle 100 commande l'ouverture du store 113. En outre, l'unité de contrôle 100 peut piloter le système motorisé d'ouverture 111 pour maintenir l'ouvrant 120 associé en position ouverte si l'air extérieur est plus chaud que l'air intérieur du bâtiment 10. En revanche, si l'air extérieur est plus froid que l'air intérieur, l'unité de contrôle 100 peut piloter le système motorisé d'ouverture 111 pour maintenir l'ouvrant 120 associé en position fermée. Alternativement, l'unité de contrôle 100 peut indiquer à un utilisateur les ouvrants qui sont à ouvrir et les ouvrants qui sont à maintenir fermés, ainsi que les protections solaires amovibles à abaisser ou à relever.

Lorsque le mode dissipatif D est sélectionné, l'unité de contrôle 100 détermine pour chaque dispositif passif 111, 112, 113, en tenant compte du contexte météorologique et de l'orientation dudit dispositif passif, dans quelle position ledit dispositif passif 111, 112, 113 permet de minimiser les apports thermiques. Par exemple, l'unité de contrôle 100 commande la fermeture du store 113 à des horaires auxquels le rayonnement solaire pourrait potentiellement réchauffer l'air intérieur du bâtiment 10. En outre, l'unité de contrôle 100 peut commander le système motorisé d'ouverture 111 pour maintenir l'ouvrant 120 associé en position ouverte lorsque le contexte entraîne un refroidissement de l'air intérieur du bâtiment 10. Alternativement, l'unité de contrôle 100 peut indiquer à un utilisateur les ouvrants qui sont à ouvrir et les ouvrants qui sont à maintenir fermés, ainsi que les protections solaires amovibles à abaisser ou à relever.

Le bâtiment 10 comporte ainsi un système de pilotage bioclimatique comportant l'unité de contrôle 100 et les dispositifs passifs 111, 112, 113. Le système de pilotage bioclimatique peut en outre comporter les dispositifs actifs de régulation thermique du bâtiment 10.

Afin de sélectionner le mode de pilotage, l'unité de contrôle 100 nécessite d'effectuer une prévision de la température intérieure du bâtiment 10, dite température intérieure. L'unité de contrôle 100 utilise pour cela un modèle de prévision de la température intérieure qui permet d'obtenir une estimation de la température intérieure en fonction de paramètres prédéfinis ($\varepsilon$, $\Phi$), chaque paramètre prédéfini étant représentatif d'une caractéristique du bâtiment. En outre, le modèle de prévision de la température intérieure permet d'obtenir une estimation de la température intérieure $T_{int\ estim}$ à au moins un instant $t_n$, situé entre un instant initial $t_i$ et un instant final $t_f$, à partir d'une valeur de température intérieure connue à l'instant initial $T_{int\ mes}(t_i)$, d'une valeur de température extérieure $T_{ext}$ connue ou estimée à l'instant initial $t_i$ et d'au moins une valeur prévisionnelle de température extérieure $T_{ext}$ à chaque instant $t_n$.

Ainsi, selon un premier exemple, le modèle de prévision de la température intérieure s'écrit :

$$T_{int\ estim1}(t_n) = T_{int\ mes}(t_i) + \frac{\varepsilon . T_{ext}(t_n + \Phi)}{T_{ext}(t_i)}$$

Le paramètre $\Phi$ est un premier paramètre prédéfini, caractéristique d'un déphasage, et $\varepsilon$ est un deuxième paramètre prédéfini correspondant à un facteur d'amortissement.

A partir d'une série de valeurs de la température extérieure $T_{ext}$ définies sur l'intervalle temporel $[t_i ; t_f]$ pour chaque instant $t_n = t_i + n. \Delta t$, avec $\Delta t$ un pas temporel de durée prédéfinie, et $n$ un entier prenant les valeurs de 0 à $(t_f - t_i)/\Delta t$, le modèle de prévision de la température permet d'obtenir une estimation de la température $T_{int\ estim1}$ à chaque instant $t_n$.

Selon un deuxième exemple, le modèle de prévision de la température intérieure est fonction de deux autres paramètres prédéfinis ($\beta$, $\varphi$) et fonction en outre de données prévisionnelles de rayonnement solaire $G_H$ estimées aux instants $t_n$. Le modèle de prévision de la température s'écrit alors :

$$T_{int\ estim2}(t_n) = T_{int\ estim1}(t_n) + \frac{\beta . G_H(t_n + \varphi)}{\max[G_H(t_n)]}$$

Où $\max[G_H(t_n)]$ représente la valeur maximale de rayonnement solaire $G_H$ sur l'intervalle temporel $[t_i ; t_f]$.

En outre, $\varphi$ est un troisième paramètre prédéfini, caractéristique d'un déphasage, et $\beta$ est un quatrième paramètre prédéfini correspondant à un facteur d'amortissement.

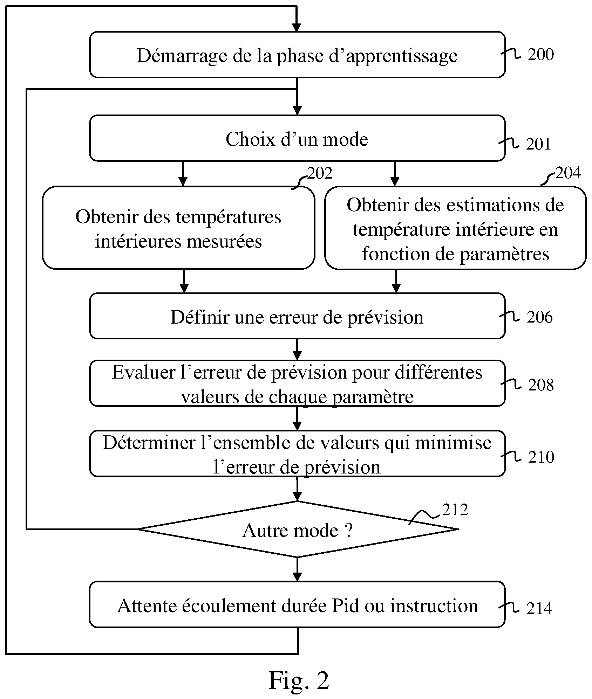

La Fig. 2 illustre schématiquement une phase d'apprentissage du procédé de sélection d'un mode de pilotage. La phase d'apprentissage a pour but de déterminer un ensemble de valeurs optimales des paramètres prédéfinis associé à chaque mode de pilotage. Autrement dit, au terme de la phase d'apprentissage, un premier ensemble de valeurs optimales est obtenu en association avec le mode accumulatif A et un second ensemble de valeurs optimales est obtenu

EP 4 198 674 B1

pour le mode dissipatif D.

Dans une première étape 200, la phase d'apprentissage démarre.

Dans une étape 201 suivante, un premier mode de pilotage est choisi, par exemple le mode accumulatif A. Deux étapes 202 et 204 sont ensuite effectuées en parallèle.

A l'étape 202, l'unité de contrôle 100 obtient des valeurs de températures intérieures mesurées $T_{int\ mes}$ à des instants $t_n = t_k$ auxquels le mode de pilotage choisi à l'étape 201 précédente était sélectionné. Par exemple, l'unité de contrôle 100 peut sélectionner ledit mode de pilotage et effectuer une série de mesures de températures intérieures pendant une durée prédéfinie. Selon un autre exemple, l'unité de contrôle 100 peut récupérer dans une base de données des valeurs de températures intérieures précédemment mesurées lorsque ledit mode de pilotage était précédemment sélectionné. Chaque valeur de température intérieure mesurée $T_{int\ mes}$ ainsi obtenue est déterminée à un instant $t_n = t_k$ situé entre un instant initial $t_i = t_a$ et un instant final $t_f = t_b$. Selon un mode de réalisation, l'unité de contrôle 100 récupère dans la base de données toutes les valeurs de températures intérieures précédemment mesurées lorsque le mode de pilotage était sélectionné et qui sont disponibles. Selon un deuxième mode de réalisation, l'unité de contrôle 100 définit un intervalle temporel $[t_a\ ;\ t_b]$ et récupère, par filtrage, toutes les valeurs de températures intérieures précédemment mesurées lorsque le mode de pilotage était sélectionné et qui appartiennent audit intervalle temporel $[t_a\ ;\ t_b]$. Selon un troisième mode de réalisation, l'unité de contrôle 100 récupère un nombre prédéfini de valeurs, par exemple les 1000 dernières valeurs de températures intérieures précédemment mesurées lorsque le mode de pilotage était sélectionné, et détermine ensuite l'intervalle temporel $[t_a\ ;\ t_b]$ comprenant lesdites valeurs de températures intérieures.

A l'étape 204, l'unité de contrôle 100 obtient des estimations de température intérieure $T_{int\ estim}$ en fonction des paramètres prédéfinis grâce au modèle de prévision de la température intérieure. Les estimations de température intérieure $T_{int\ estim}$ sont obtenues pour les mêmes instants $t_k$ que les valeurs de températures intérieures mesurées obtenues à l'étape 202.

Pour obtenir lesdites estimations de température intérieure $T_{int\ estim}$, l'unité de contrôle 100 récupère une valeur de température intérieure mesurée $T_{int\ mes}$ à l'instant initial $t_i = t_a$, par exemple en provenance d'une base de données accessible depuis l'unité de contrôle 100. L'unité de contrôle 100 récupère en outre des valeurs de températures extérieures $T_{ext}$ définies à l'instant initial $t_i = t_a$ et aux instants $t_k$, en provenance par exemple d'un service externe de données météorologiques ou d'une base de données. Les valeurs de température extérieure $T_{ext}$ peuvent alternativement être mesurées et enregistrées dans une base de données accessible depuis l'unité de contrôle 100.

Selon un mode de réalisation, l'unité de contrôle 100 peut récupérer des valeurs de températures extérieures $T_{ext}$ à des instants $t_x$ définis sur l'intervalle temporel $[t_i\ ;\ t_f]$. L'unité de contrôle 100 détermine alors les valeurs des températures extérieures $T_{ext}$ aux instants $t_k$ par interpolation linéaire à partir des valeurs définies aux instants $t_x$.

Selon un mode de réalisation, l'unité de contrôle 100 récupère en outre des données de rayonnement solaire $G_H$ estimées aux instants $t_k$.

Dans une étape 206 suivant les étapes 202 et 204 parallèles, l'unité de contrôle 100 définit une erreur de prévision représentative d'écarts entre les valeurs de températures intérieures mesurées $T_{int\ mes}$ obtenues à l'étape 202 et les estimations de la température intérieure $T_{int\ estim}$ obtenues à l'étape 204. L'erreur de prévision est exprimée en fonction des paramètres prédéfinis selon le modèle de prévision de la température intérieure utilisé à l'étape 204.

Par exemple, l'erreur de prévision est une erreur moyenne absolue entre les valeurs de températures intérieures mesurées $T_{int\ mes}$ et les estimations de la température intérieure $T_{int\ estim}$ obtenues, et s'écrit :

$$\sum_{t_i}^{t_f} \frac{|T_{int\ estim}(t_k) - T_{int\ mes}(t_k)|}{K}$$

, où K représente le nombre de valeurs de températures intérieures mesurées $T_{int\ mes}$ obtenues à l'étape 202.

Selon un autre exemple, l'erreur de prévision est la somme des carrés des résidus des valeurs de températures intérieures mesurées $T_{int\ mes}$ par rapport aux estimations de température intérieure $T_{int\ estim}$ obtenues.

Selon un troisième exemple, l'erreur de prévision est l'erreur quadratique moyenne de la différence entre les valeurs de températures intérieures mesurées $T_{int\ mes}$ et les estimations de la température intérieure $T_{int\ estim}$ obtenues. L'erreur de prévision est alternativement la racine carrée de l'erreur quadratique moyenne de la différence entre les valeurs de températures intérieures mesurées $T_{int\ mes}$ et les estimations de la température intérieure $T_{int\ estim}$ obtenues.

Dans une étape 208 suivante, l'unité de contrôle 100 effectue une évaluation de l'erreur de prévision pour différentes valeurs des paramètres prédéfinis, dans l'objectif d'identifier les valeurs des paramètres prédéfinis permettant de minimiser l'erreur de prévision. Une méthode d'optimisation peut être utilisée pour tester efficacement différents ensembles de valeurs de paramètres prédéfinis. Par exemple, une première méthode d'optimisation pouvant être utilisée est une méthode basée sur l'exploitation d'un algorithme génétique. Une seconde méthode d'optimisation est une méthode d'optimisation itérative telle que la méthode d'optimisation par essaims particulaires ou méthode PSO (pour « Particle Swarm Optimization » en anglais), telle que définie dans le livre Introduction to Nature-Inspired Optimization (2017), chapitre 3 "Particle Swarm Optimization Algorithms". L'erreur de prévision est alors considérée comme une fonction de coût à minimiser pour implémenter un calcul d'optimisation. Le calcul d'optimisation nécessite une initialisation des paramètres prédéfinis. Lorsque le calcul d'optimisation est effectué pour la première fois pour le mode de pilotage choisi, autrement dit si la phase d'apprentissage est effectuée pour la première fois pour le mode de pilotage choisi, les paramètres prédéfinis sont initialisés à des valeurs initiales prédéfinies telles que : $\varepsilon = 1$; $\Phi = 0$ ; $\beta = 0$ $et$ $\varphi = 0$. Dans le cas contraire, si la phase d'apprentissage a déjà été effectuée préalablement pour le mode de pilotage choisi, les paramètres prédéfinis sont initialisés à des valeurs optimales obtenues lors d'une phase d'apprentissage précédente.

Dans une étape 210 suivante, l'unité de contrôle 100 détermine l'ensemble de valeurs optimales, associé au mode de pilotage choisi, qui permet de minimiser l'erreur de prévision, chaque valeur de l'ensemble de valeurs optimales étant associée à un paramètre prédéfini du modèle de prévision de la température intérieure.

Selon un mode de réalisation, l'erreur de prévision est considérée minimale lorsque le résultat de l'erreur de prévision est inférieur à un critère d'erreur. Le critère d'erreur prédéfini prend une valeur prédéfinie qui dépend de l'expression de l'erreur de prévision définie à l'étape 206. Par exemple, lorsque l'erreur de prévision est une erreur moyenne absolue entre les valeurs de températures intérieures mesurées $T_{int\ mes}$ et les estimations de la température intérieure $T_{int\ estim}$ obtenues, le critère d'erreur peut avoir une valeur de 0,5°C.

Le critère d'erreur peut être utilisé dans le cadre du calcul d'optimisation mis en œuvre à l'étape 208 afin de déterminer l'arrêt du calcul d'optimisation et ainsi déterminer l'ensemble de valeurs optimales associé au mode de pilotage choisi. Dans le cas contraire (cas non représenté sur les figures), lorsque le calcul d'optimisation ne permet pas de donner un résultat de l'erreur de prévision inférieur ou égal au critère d'erreur, un nouveau calcul d'optimisation peut être effectué à l'aide d'une autre méthode d'optimisation (en utilisant par exemple un algorithme génétique lorsqu'une méthode d'optimisation PSO n'a pas abouti), à l'étape 208, ou en définissant une erreur de prévision à l'aide d'estimations de la température intérieure $T_{int\ estim}$ déterminées à partir d'un autre modèle de prévision de la température intérieure.

Ainsi, la détermination du modèle de prévision de la température pour chaque mode de pilotage nécessite une faible puissance embarquée.

Dans une étape 212 suivante, l'unité de contrôle 100 détermine s'il y a un mode de pilotage qui n'a pas encore été choisi lors d'une étape 201 précédente lors de la phase d'apprentissage en cours, autrement dit depuis l'étape 200 précédente. S'il existe un mode de pilotage qui n'a pas été choisi, alors l'unité de contrôle 100 retourne à l'étape 201 et choisit ledit mode de pilotage. Par exemple, l'unité de contrôle 100 choisit le mode dissipatif D si le mode accumulatif A a été choisi précédemment.

Dans le cas contraire, autrement dit si un ensemble de valeurs optimales a été déterminé pour chacun des modes accumulatif A et dissipatif D, une étape 214 est effectuée.

A l'étape 214, l'unité de contrôle 100 attend l'écoulement d'une durée prédéterminée $P_{id}$ puis retourne à l'étape 200 afin de réitérer la phase d'apprentissage. La durée prédéterminée $P_{id}$ est par exemple de 3 heures ou de 6 heures. La durée prédéterminée $P_{id}$ peut correspondre à une durée entre la réception de deux séries prévisionnelles de températures extérieures successives par l'unité de contrôle 100, en provenance d'un service externe de données météorologiques. Ainsi, l'ensemble de valeurs optimales associé à un mode de pilotage est régulièrement réévalué.

Alternativement, à l'étape 214, l'unité de contrôle 100 attend une instruction de démarrage de la phase d'apprentissage avant de retourner à l'étape 200. L'instruction de démarrage peut être émise à chaque fois qu'une phase de sélection du procédé de sélection d'un mode de pilotage doit être démarrée, par exemple lorsqu'une nouvelle prévision de température intérieure est requise.

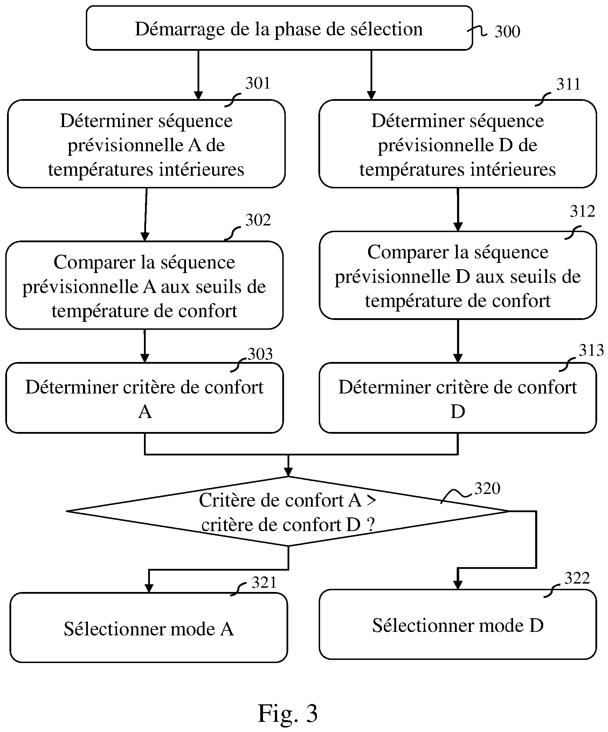

La Fig. 3 illustre schématiquement la phase de sélection du procédé de sélection d'un mode de pilotage. La phase de sélection a pour but de déterminer des valeurs prévisionnelles de température intérieure pour chaque mode de pilotage puis de sélectionner, à l'aide desdites valeurs prévisionnelles de température intérieure, parmi le mode accumulatif A et le mode dissipatif D, le mode de pilotage qui permet de limiter au mieux une sensation d'inconfort.

Dans une première étape 300, la phase de sélection démarre. Le démarrage de la phase de sélection peut être déclenché régulièrement, après l'écoulement d'une durée prédéfinie. Alternativement, le démarrage de la phase de sélection est déclenché à chaque fois qu'une nouvelle série prévisionnelle de températures extérieures est reçue par l'unité de contrôle 100, en provenance d'un service externe de données météorologiques, par exemple toutes les 3 heures ou toutes les 6 heures. Deux étapes 301 et 311 sont ensuite effectuées en parallèle. Selon un mode de réalisation, l'unité de contrôle 100 envoie une instruction de démarrage de la phase d'apprentissage à l'étape 300 et attend une confirmation d'aboutissement de la phase d'apprentissage avant de démarrer la phase de sélection.

A l'étape 301, l'unité de contrôle 100 détermine une séquence prévisionnelle de températures intérieures associée au mode accumulatif A, dite séquence prévisionnelle A. La séquence prévisionnelle A comporte des estimations, associées au mode accumulatif A, de la température intérieure $T_{int\ estim\_A}$ définies à des instants $t_n = t_m$ situés entre un instant initial $t_i = t_c$ et un instant final $t_f = t_d$. Chaque dite estimation de la température intérieure $T_{int\ estim\_A}$ est calculée à partir du modèle de prévision de la température intérieure en y appliquant l'ensemble de valeurs optimales associées au mode accumulatif A déterminé lors de la phase d'apprentissage précédente. L'instant initial $t_i = t_c$ peut être un instant actuel ou passé, et l'instant final $t_f = t_d$ est un instant futur.

A l'étape 311, l'unité de contrôle 100 détermine une séquence prévisionnelle de températures intérieures associée au mode dissipatif D, dite séquence prévisionnelle D. La séquence prévisionnelle D comporte des estimations, associées au mode dissipatif D, de la température intérieure $T_{int\ estim\_D}$ aux instants $t_m$ situés entre l'instant initial $t_i = t_c$ et

l'instant final $t_f = t_d$. Chaque dite estimation de la température intérieure $T_{int\ estim\_D}$ est calculée à partir du modèle de prévision de la température intérieure en y appliquant l'ensemble de valeurs optimales associées au mode dissipatif D déterminé lors de la phase d'apprentissage précédente.

Pour effectuer le calcul de chaque séquence prévisionnelle, l'unité de contrôle 100 récupère des valeurs prévisionnelles de températures extérieures $T_{ext}$ aux instants $t_m$ reçues par exemple en provenance d'un service externe de données météorologiques. Selon un mode de réalisation, les valeurs prévisionnelles de températures extérieures $T_{ext}$ aux instants $t_m$ sont déduites, par interpolation linéaire de valeurs de températures extérieures $T_{ext}$ définies sur l'intervalle temporel $[t_c ; t_d]$ à d'autres instants que les instants $t_m$. Par exemple, des valeurs de températures extérieures $T_{ext}$ reçues sont définies sur un intervalle temporel $[t_c ; t_d]$ de durée H égale à 48 heures ou 96 heures, à des instants $t_x = t_c + x. \Delta T,$ avec un premier pas temporel $\Delta T$ de 3 heures, $x$ étant un entier. Pour obtenir des estimations de températures intérieures plus rapprochées, l'unité de contrôle 100 effectue une interpolation linéaire des valeurs de températures extérieures $T_{ext}$ reçues afin de déterminer des températures extérieures $T_{ext}$ à des instants $t_m$ tels que $t_m = t_c + m. \Delta t,$ avec un second pas temporel $\Delta t$ de durée prédéfinie inférieure à $\Delta T$, par exemple $\Delta t$ compris entre 5 minutes et 30 minutes. L'unité de contrôle 100 peut ainsi déterminer des estimations de température intérieure $T_{int\ estim}$, pour chaque mode de pilotage, définies sur une durée H de 48 ou 96 heures à partir de l'instant initial $t_c$, chaque estimation de température intérieure $T_{int\ estim}$ étant distante temporellement de l'estimation de température intérieure $T_{int\ estim}$ précédente d'une durée égale au second pas temporel $\Delta t$ de 5 à 30 minutes.

L'unité de contrôle 100 récupère en outre une valeur de température intérieure $T_{int\ mes}$ à l'instant initial $t_i = t_c$, obtenue par mesure, et une valeur de température extérieure $T_{ext}$ à l'instant initial $t_i = t_c$, obtenue par mesure ou issue de valeurs prévisionnelles de températures extérieures $T_{ext}$ reçues par l'unité de contrôle 100.

Ainsi, les données nécessaires au calcul de chaque séquence prévisionnelle sont aisément disponibles puisqu'elles comportent uniquement des valeurs de températures mesurées et des valeurs de températures issues d'un service externe de prévisions météorologiques.

Selon un mode de réalisation, l'unité de contrôle 100 récupère en outre, pour effectuer le calcul de chaque séquence prévisionnelle, des données prévisionnelles de rayonnement solaire $G_H$ estimées aux instants $t_m$.

Dans une étape 302, suivant l'étape 301, l'unité de contrôle 100 compare la séquence prévisionnelle A à un seuil minimal de température de confort $T_{conf\ min}$ et à un seuil maximal de température de confort $T_{conf\ max}$.

De manière similaire, dans une étape 312, suivant l'étape 311, l'unité de contrôle 100 compare la séquence prévisionnelle D au seuil minimal de température de confort $T_{conf\ min}$ et au seuil maximal de température de confort $T_{conf\ max}$.

Lorsque la température intérieure est incluse entre le seuil minimal de température de confort $T_{conf\ min}$ et le seuil maximal de température de confort $T_{conf\ max}$, la température intérieure est considérée comme respectant une sensation de confort. En revanche, si la température intérieure franchit l'un desdits seuils et se retrouve au-dessous du seuil minimal de température de confort $T_{conf\ min}$ ou au-dessus du seuil maximal de température de confort $T_{conf\ max}$, la température intérieure est considérée comme générant une sensation d'inconfort.

Selon un mode de réalisation, les seuil minimal et seuil maximal de température de confort $T_{conf\ min}$ et $T_{conf\ max}$ ont chacun une valeur prédéfinie constante.

Selon un mode de réalisation alternatif, les seuils minimal et seuil maximal de température de confort $T_{conf\ min}$ et $T_{conf\ max}$ sont déterminés en fonction d'une température extérieure glissante $T_{ext\ gliss}$, et d'un offset inférieur $offset_{inf}$, respectivement d'un offset supérieur $offset_{sup}$, pour le seuil minimal, respectivement maximal, de température de confort.

Par exemple, la norme NF EN 16798-1 définit les valeurs des seuils minimal et seuil maximal de température de confort $T_{conf\ min}$ et $T_{conf\ max}$ selon :

$$T_{conf\ min} = 0,33.T_{ext\ gliss} + 18,8 - offset_{inf}$$

$$T_{conf\ max} = 0,33.T_{ext\ gliss} + 18,8 + offset_{sup}$$

La température extérieure glissante $T_{ext\ gliss}$ d'un jour $j$ est définie par la norme NF EN 16798-1 en fonction des températures extérieures moyennes des trois jours précédents $T_{ext\_moy}^{j-i}$, avec $i = 1$ à 3, et avec un paramètre $\alpha = 0,8$, selon :

$$T_{ext\ gliss}(j) = (1 - \alpha)(T_{ext_{moy}}^{j-1} + \alpha.T_{ext_{moy}}^{j-2} + \alpha^2.T_{ext_{moy}}^{j-3})$$

En outre, les valeurs d'offset inférieur $offset_{inf}$ et d'offset supérieur $offset_{sup}$ varient selon une catégorie de bâtiment 10, représentative du type de population utilisant le bâtiment 10. Par exemple, pour un bâtiment 10 de catégorie 1, **offset**$_{inf}$ = 3 et **offset**$_{sup}$ = 2 ; pour un bâtiment 10 de catégorie 2, **offset**$_{inf}$ = 4 et **offset**$_{sup}$ = 3, et pour un bâtiment 10 de catégorie 3, **offset**$_{inf}$ = 5 et **offset**$_{sup}$ = 4.

Dans une étape 303 suivant l'étape 302, l'unité de contrôle 100 détermine un critère de confort associé au mode accumulatif A, dit critère de confort A, à partir de la comparaison de la séquence prévisionnelle A aux seuils minimal et maximal de température de confort

$$T_{conf\ min}\ \text{et}\ T_{conf\ max}.$$

Dans une étape 313 suivant l'étape 312, l'unité de contrôle 100 détermine un critère de confort associé au mode dissipatif D, dit critère de confort D, à partir de la comparaison de la séquence prévisionnelle D aux seuils minimal et maximal de température de confort

$$T_{conf\ min}\ \text{et}\ T_{conf\ max}.$$

Le critère de confort est représentatif d'une sensation de confort d'un utilisateur du bâtiment 10.

Selon un premier mode de réalisation, chaque critère de confort a une durée de confort déterminée entre l'instant initial $t_i = t_c$ de la séquence prévisionnelle associée et un instant auquel ladite séquence prévisionnelle franchit le seuil minimal de température de confort $T_{conf\ min}$ ou le seuil maximal de température de confort $T_{conf\ max}$ pour la première fois. Plus la durée de confort est élevée, plus la sensation de confort est élevée.

Selon un second mode de réalisation, le critère de confort est inversement proportionnel à une intensité d'inconfort représenté par une surface entre la droite correspondant au seuil, minimal ou maximal, de température de confort qui est franchi par la séquence prévisionnelle, et la courbe représentant la séquence prévisionnelle, entre un instant de début $t_{deb}$ de franchissement dudit seuil de température de confort, et un instant de fin $t_{fin}$ de franchissement dudit seuil de température de confort.

L'intensité d'inconfort peut être calculée, entre l'instant de début $t_{deb}$ de franchissement et l'instant de fin $t_{fin}$ de franchissement, en sommant, pour chaque instant $t_m$ entre instant de début $t_{deb}$ et instant de fin $t_{fin}$ auquel est définie une estimation de la température intérieure $T_{int\ estim}(t_m)$, la valeur absolue de la différence entre l'estimation de température intérieure $T_{int\ estim}$ et le seuil minimal ou maximal de température de confort franchi multipliée par un pas temporel $\Delta t$ de durée prédéfinie séparant chaque estimation de température intérieure $T_{int\ estim}$ consécutive de la séquence prévisionnelle considérée, soit :

$$\sum_{t_{deb}}^{t_{fin}} \left| T_{int\ estim}(t_m) - T_{conf\ min/\max} \right| . \Delta t$$

Alternativement, pour une température intérieure moyenne horaire calculée à partir des estimations de température intérieure $T_{int\ estim}$ de la séquence prévisionnelle, l'intensité d'inconfort peut être calculée selon :

$$\sum_{t_{deb}}^{t_{fin}} \left| T_{moy}(t) - T_{conf\ min/\max} \right|$$

Plus l'intensité d'inconfort est faible, plus la sensation de confort est élevée et plus le critère de confort est élevé.

Lorsque le critère de confort associé à chaque mode de pilotage est déterminé, autrement dit que chacune des étapes 303 et 313 est achevée, une étape 320 est effectuée.

A l'étape 320, le critère de confort A est comparé au critère de confort D.

Si le critère de confort A est représentatif d'une sensation de confort plus importante que le critère de confort D, autrement dit si le critère de confort A est plus élevé que le critère de confort D, une étape 321 est effectuée. Dans le cas contraire, une étape 322 est effectuée.

A l'étape 321, l'unité de contrôle 100 sélectionne le mode accumulatif A pour réguler la température intérieure du bâtiment 10.

A l'étape 322, l'unité de contrôle 100 sélectionne le mode dissipatif D pour réguler la température intérieure du bâtiment 10.

La Fig. 4 illustre schématiquement un exemple d'architecture matérielle de l'unité de contrôle 100 du bâtiment 10. L'unité de contrôle 10 comporte alors, reliés par un bus de communication 410 : un processeur ou CPU (« Central Processing Unit » en anglais) 401 ; une mémoire vive RAM (« Random Access Memory » en anglais) 402 ; une mémoire morte ROM (« Read Only Memory » en anglais) 403 ; une unité de stockage ou un lecteur de support de stockage, tel qu'un disque dur HDD (« Hard Disk Drive » en anglais) 404 ; et une interface de communication 405 permettant de communiquer avec les dispositifs passifs 111, 112, 113 du bâtiment 10.

Le processeur 401 est capable d'exécuter des instructions chargées dans la RAM 402 à partir de la ROM 403, d'une mémoire externe (non représentée), d'un support de stockage, ou d'un réseau de communication. Lorsque l'unité de contrôle 100 est mise sous tension, le processeur 401 est capable de lire de la RAM 402 des instructions et de les exécuter. Ces instructions forment un programme d'ordinateur causant l'implémentation, par le processeur 401, de tout ou partie des algorithmes et étapes décrits ici en relation avec l'unité de contrôle 100.

Ainsi, tout ou partie des algorithmes et étapes décrits en relation avec l'unité de contrôle 100 peut être implémenté sous forme logicielle par l'exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

## Revendications

1. Procédé de sélection d'un mode de pilotage de dispositifs de régulation thermique (111, 112, 113) d'un bâtiment, parmi un premier mode de pilotage, accumulatif, configuré pour maximiser les apports thermiques extérieurs et minimiser les déperditions thermiques, et un second mode de pilotage, dissipatif, configuré pour minimiser les apports thermiques extérieurs et maximiser les déperditions thermiques, chaque dispositif de régulation thermique étant destiné à réguler la température intérieure du bâtiment (10), dite température intérieure, le procédé étant exécuté par une unité de contrôle (100) du bâtiment (10) et comportant, pour chacun des modes de pilotage :

   - Obtenir (204) des estimations de la température intérieure en fonction de paramètres prédéfinis grâce à un modèle de prévision de la température intérieure,
   - Définir (206) une erreur de prévision représentative d'écarts entre des valeurs de températures intérieures mesurées (202) et les estimations de la température intérieure obtenues, chaque écart étant défini à un instant auquel la température intérieure mesurée est déterminée lorsque ledit mode de pilotage est sélectionné, l'erreur de prévision étant fonction des paramètres prédéfinis,
   - Déterminer (210) un ensemble de valeurs optimales associé audit mode de pilotage, comportant une valeur associée à chaque paramètre prédéfini, et permettant de minimiser l'erreur de prévision,
   - Déterminer (301, 311) une séquence prévisionnelle associée audit mode de pilotage, la séquence prévisionnelle comportant des estimations de la température intérieure calculées, à partir d'un instant initial $t_i$, selon le modèle de prévision de la température intérieure en appliquant l'ensemble déterminé des valeurs optimales associé au mode de pilotage,
   - Déterminer (303, 313) un critère de confort associé au mode de pilotage, représentatif d'une sensation de confort et caractérisant un franchissement d'un seuil minimal de température de confort et d'un seuil maximal de température de confort par les estimations de température intérieure de la séquence prévisionnelle.
   Le procédé comportant en outre :

   - Sélectionner (321, 322) le mode de pilotage pour lequel le critère de confort déterminé associé est représentatif de la plus grande sensation de confort (320),

   **caractérisé en ce que** le modèle de prévision est fonction d'un premier paramètre prédéfini $\Phi$, caractéristique d'un déphasage, d'un deuxième paramètre prédéfini $\varepsilon$ correspondant à un facteur d'amortissement, l'estimation de la température intérieure $\boldsymbol{T_{int\,estim}}$ à un instant $\boldsymbol{t_n}$, situé entre l'instant initial $\boldsymbol{t_i}$ et un instant final $\boldsymbol{t_f}$, étant obtenue à partir d'une valeur de température intérieure $\boldsymbol{T_{int\,mes}}$ connue à l'instant initial $\boldsymbol{t_i}$, d'une valeur de température extérieure $T_{ext}$ connue ou estimée à l'instant initial $t_i$ et d'une valeur prévisionnelle de température extérieure $T_{ext}$ à l'instant $\boldsymbol{t_n}$, selon :

$$T_{int\,estim}(t_n) = T_{int\,mes}(t_i) + \frac{\varepsilon \cdot T_{ext}(t_n + \Phi)}{T_{ext}(t_i)}.$$

2. Procédé selon la revendication 1, dans lequel déterminer (210) l'ensemble des valeurs optimales de paramètres prédéfinis permettant de minimiser l'erreur de prévision comprend : considérer que l'erreur de prévision est minimisée lorsque l'erreur de prévision est inférieure à un critère prédéfini.

3. Procédé selon l'une des revendications 1 et 2, dans lequel déterminer (210) l'ensemble des valeurs optimales permettant de minimiser l'erreur de prévision, est effectué par implémentation d'un calcul d'optimisation basé sur une méthode d'optimisation itérative ou sur l'exploitation d'un algorithme génétique.

4. Procédé selon l'une des revendications 1 à 3 dans lequel l'erreur de prévision est une erreur moyenne absolue entre les valeurs de températures intérieures mesurées $T_{int\,mes}(t)$ et les estimations de la température intérieure $T_{int\,estim}(t)$ obtenues, et s'écrit :

$$\sum_{t_i}^{t_f} \frac{|T_{int\,estim}(t) - T_{int\,mes}(t)|}{N}$$ ; où N représente le nombre de valeurs de températures intérieures mesurées $T_{int\,mes}(t)$ sur l'intervalle temporel [$t_i$ ; $t_f$].

5. Procédé selon l'une des revendications 1 à 4 dans lequel le critère de confort est une durée entre l'instant initial $t_i$ et un instant auquel la séquence prévisionnelle franchit le seuil minimal ou le seuil maximal de température de confort pour la première fois.

6. Procédé selon l'une des revendications 1 à 4 dans lequel le critère de confort est inversement proportionnel à une surface entre la droite correspondant au seuil, minimal ou maximal, de température de confort qui est franchi par la séquence prévisionnelle, et la courbe représentant la séquence prévisionnelle, entre un instant de début $t_{deb}$ de franchissement dudit seuil de température de confort, et un instant de fin $t_{fin}$ de franchissement dudit seuil de température de confort.

7. Procédé selon l'une des revendications 1 à 6 dans lequel chaque dispositif de régulation thermique est un dispositif passif (111, 112, 113) qui ne consomme pas d'énergie pour chauffer ou refroidir le bâtiment.

8. Dispositif destiné à sélectionner un mode de pilotage de dispositifs de régulation thermique (111, 112, 113) d'un bâtiment (10), parmi un premier mode de pilotage, accumulatif, configuré pour maximiser les apports thermiques extérieurs et minimiser les déperditions thermiques, et un second mode de pilotage, dissipatif, configuré pour minimiser les apports thermiques extérieurs et maximiser les déperditions thermiques, chaque dispositif de régulation thermique (111, 112, 113) étant destiné à réguler la température d'air intérieure du bâtiment (10), dite température intérieure, le dispositif étant **caractérisé en ce qu'**il comporte :

- Des moyens pour obtenir (204), pour chacun des modes de pilotage, des estimations de la température intérieure en fonction de paramètres prédéfinis grâce à un modèle de prévision de la température intérieure,
- Des moyens pour définir (206), pour chacun des modes de pilotage, une erreur de prévision représentative d'écarts entre des valeurs de températures intérieures mesurées et les estimations de la température intérieure obtenues, chaque écart étant défini à un instant auquel la température intérieure mesurée est déterminée lorsque ledit mode de pilotage est sélectionné, l'erreur de prévision étant fonction des paramètres prédéfinis,
- Des moyens pour déterminer (210), pour chacun des modes de pilotage, un ensemble de valeurs optimales associé audit mode de pilotage, comportant une valeur associée à chaque paramètre prédéfini et permettant de minimiser l'erreur de prévision,
- Des moyens pour déterminer (301, 311), pour chacun des modes de pilotage, une séquence prévisionnelle associée audit mode de pilotage, la séquence prévisionnelle comportant des estimations de la température intérieure calculées, à partir d'un instant initial $t_i$, selon le modèle de prévision de la température intérieure en appliquant l'ensemble déterminé des valeurs optimales associé au mode de pilotage,
- Des moyens pour déterminer (303, 313), pour chacun des modes de pilotage, un critère de confort associé au mode de pilotage, représentatif d'une sensation de confort et caractérisant un franchissement d'un seuil minimal de température de confort et d'un seuil maximal de température de confort par les estimations de température intérieure de la séquence prévisionnelle,
- Des moyens pour sélectionner (321, 322) le mode de pilotage pour lequel le critère de confort déterminé associé est représentatif de la plus grande sensation de confort (320), **caractérisé en ce que** le modèle de prévision est fonction d'un premier paramètre prédéfini $\Phi$, caractéristique d'un déphasage, d'un deuxième paramètre prédéfini $\varepsilon$ correspondant à un facteur d'amortissement, l'estimation de la température intérieure $\boldsymbol{T_{int\,estim}}$ à un instant $\boldsymbol{t_n}$, situé entre l'instant initial $\boldsymbol{t_i}$ et un instant final $\boldsymbol{t_f}$, étant obtenue à partir d'une valeur de température intérieure $\boldsymbol{T_{int\,mes}}$ connue à l'instant initial $\boldsymbol{t_i}$, d'une valeur de température extérieure $T_{ext}$ connue ou estimée à l'instant initial $t_i$ et d'une valeur prévisionnelle de température extérieure $T_{ext}$ à l'instant $\boldsymbol{t_n}$, selon :

$$T_{int\,estim}(t_n) = T_{int\,mes}(t_i) + \frac{\varepsilon\,.T_{ext}(t_n + \Phi)}{T_{ext}(t_i)}.$$

**9.** Programme d'ordinateur pouvant être stocké sur un support et/ou téléchargé d'un réseau de communication, afin d'être lu par un processeur, et **caractérisé en ce qu'**il comprend des instructions pour implémenter le procédé selon l'une des revendications 1 à 7, lorsque ledit programme est exécuté par le processeur.

**10.** Support de stockage d'informations stockant un programme d'ordinateur selon la revendication précédente.

**Patentansprüche**

**1.** Verfahren zum Auswählen eines Ansteuerungsmodus für Vorrichtungen (111, 112, 113) zur thermischen Regelung eines Gebäudes unter einem ersten, akkumulativen, Ansteuerungsmodus, der dazu ausgestaltet ist, die thermischen Einträge von außen zu maximieren und die thermischen Verluste zu minimieren, und einem zweiten, dissipativen, Ansteuerungsmodus, der dazu ausgestaltet ist, die thermischen Einträge von außen zu minimieren und die thermischen Verluste zu maximieren, wobei jede Vorrichtung zur thermischen Regelung dazu bestimmt ist, die Innentemperatur des Gebäudes (10), Innentemperatur genannt, zu regeln, wobei das Verfahren von einer Steuerungseinheit (100) des Gebäudes (10) ausgeführt wird und, für jeden der Ansteuerungsmodi, umfasst:

- Erhalten (204) von Schätzungen der Innentemperatur in Abhängigkeit von vorgegebenen Parametern dank eines Vorhersagemodells für die Innentemperatur,
- Definieren (206) eines Vorhersagefehlers, der für Abweichungen zwischen Werten von gemessenen Innentemperaturen (202) und den erhaltenen Schätzungen der Innentemperatur repräsentativ ist, wobei jede Abweichung zu einem Zeitpunkt definiert wird, zu dem die gemessene Innentemperatur bestimmt wird, wenn der Ansteuerungsmodus ausgewählt wird, wobei der Vorhersagefehler von den vorgegebenen Parametern abhängig ist,
- Bestimmen (210) eines Satzes von optimalen Werten, der dem Ansteuerungsmodus zugeordnet ist, einen jedem vorgegebenen Parameter zugeordneten Wert umfasst und es ermöglicht, den Vorhersagefehler zu minimieren,
- Bestimmen (301, 311) einer dem Ansteuerungsmodus zugeordneten voraussichtlichen Sequenz, wobei die voraussichtliche Sequenz Schätzungen der Innentemperatur umfasst, die ausgehend von einem Anfangszeitpunkt $t_i$ nach dem Vorhersagemodell für die Innentemperatur berechnet werden, indem der dem Ansteuerungsmodus zugeordnete bestimmte Satz der optimalen Werte angewandt wird,
- Bestimmen (303, 313) eines dem Ansteuerungsmodus zugeordneten Komfortkriteriums, das für ein Komfortempfinden repräsentativ ist und eine Überschreitung eines minimalen Schwellenwerts einer Komforttemperatur und eines maximalen Schwellenwerts einer Komforttemperatur durch die Schätzungen der Innentemperatur der voraussichtlichen Sequenz repräsentiert,
wobei das Verfahren ferner umfasst:

- Auswählen (321, 322) des Ansteuerungsmodus, bei dem das zugeordnete bestimmte Komfortkriterium für das größte Komfortempfinden (320) repräsentativ ist, **dadurch gekennzeichnet, dass** das Vorhersagemodell abhängig ist von einem ersten vorgegebenen Parameter $\Phi$, der für eine Phasenverschiebung kennzeichnend ist, von einem zweiten vorgegebenen Parameter $\varepsilon$, der einem Dämpfungsfaktor entspricht,

wobei das Schätzen der Innentemperatur $T_{int\,estim}$ zu einem Zeitpunkt $t_n$, der zwischen dem Anfangszeitpunkt $t_i$ und einem Endzeitpunkt $t_f$ liegt, ausgehend von einem bekannten Wert der Innentemperatur $T_{int\,mes}$ zu dem Anfangszeitpunkt $t_i$, von einem bekannten oder geschätzten Wert der Außentemperatur $T_{ext}$ zu dem Anfangszeitpunkt $t_i$ und von einem voraussichtlichen Wert der Außentemperatur $T_{ext}$ zu dem Zeitpunkt $t_n$ erhalten wird gemäß:

$$T_{int\,estim}(t_n) = T_{int\,mes}(t_i) + \frac{\varepsilon\,.T_{ext}(t_n + \Phi)}{T_{ext}(t_i)}.$$

**2.** Verfahren nach Anspruch 1, wobei das Bestimmen (210) des Satzes der optimalen Werte von vorgegebenen Parametern, der es ermöglicht, den Vorhersagefehler zu minimieren, umfasst:

Ausgehen davon, dass der Vorhersagefehler minimiert ist, wenn der Vorhersagefehler kleiner als ein vorgegebenes Kriterium ist.

3. Verfahren nach einem der Ansprüche 1 und 2, wobei das Bestimmen (210) des Satzes der optimalen Werte, der es ermöglicht, den Vorhersagefehler zu minimieren, durch Implementierung einer Optimierungsberechnung erfolgt, die auf einer Methode zur iterativen Optimierung oder auf der Nutzung eines genetischen Algorithmus basiert.

4. Verfahren nach einem der Ansprüche 1 bis 3, wobei der Vorhersagefehler ein absoluter mittlerer Fehler zwischen den Werten von gemessenen Innentemperaturen $T_{int\ mes}(t)$ und den erhaltenen Schätzungen der Innentemperatur $T_{int\ estim}(t)$ ist und wie folgt ausgedrückt wird: $\dfrac{\sum_{t_i}^{t_f} |T_{int\ estim}(t) - T_{int\ mes}(t)|}{N}$ ; wobei N für die Anzahl von Werten von gemessenen Innentemperaturen $T_{int\ mes}(t)$ über das Zeitintervall $[t_i; t_f]$ steht.

5. Verfahren nach einem der Ansprüche 1 bis 4, wobei das Komfortkriterium eine Dauer zwischen dem Anfangszeitpunkt $t_i$ und einem Zeitpunkt ist, zu dem die voraussichtliche Sequenz den minimalen Schwellenwert oder den maximalen Schwellenwert der Komforttemperatur zum ersten Mal überschreitet.

6. Verfahren nach einem der Ansprüche 1 bis 4, wobei das Komfortkriterium umkehrt proportional ist zu einer Fläche zwischen der Geraden, die dem, minimalen oder maximalen, Schwellenwert der Komforttemperatur entspricht, der von der voraussichtlichen Sequenz überschritten wird, und der die voraussichtliche Sequenz repräsentierenden Kurve zwischen einem Beginnzeitpunkt $t_{deb}$ des Überschreiten des Schwellenwerts der Komforttemperatur und einem Endezeitpunkt $t_{fin}$ des Überschreitens des Schwellenwerts der Komforttemperatur.

7. Verfahren nach einem der Ansprüche 1 bis 6, wobei jede Vorrichtung zur thermischen Regelung eine passive Vorrichtung (111, 112, 113) ist, die keine Energie verbraucht, um das Gebäude zu heizen oder zu kühlen.

8. Vorrichtung, die dazu bestimmt ist, einen Ansteuerungsmodus für Vorrichtungen (111, 112, 113) zur thermischen Regelung eines Gebäudes (10) unter einem ersten, akkumulativen, Ansteuerungsmodus, der dazu ausgestaltet ist, die thermischen Einträge von außen zu maximieren und die thermischen Verluste zu minimieren, und einem zweiten, dissipativen, Ansteuerungsmodus, der dazu ausgestaltet ist, die thermischen Einträge von außen zu minimieren und die thermischen Verluste zu maximieren, auszuwählen, wobei jede Vorrichtung (111, 112, 113) zur thermischen Regelung dazu bestimmt ist, die Luftinnentemperatur des Gebäudes (10), Innentemperatur genannt, zu regeln, wobei die Vorrichtung **dadurch gekennzeichnet ist, dass** sie umfasst:

   - Mittel zum Erhalten (204), für jeden der Ansteuerungsmodi, von Schätzungen der Innentemperatur in Abhängigkeit von vorgegebenen Parametern dank eines Vorhersagemodells für die Innentemperatur,
   - Mittel zum Definieren (206), für jeden der Ansteuerungsmodi, eines Vorhersagefehlers, der für Abweichungen zwischen Werten von gemessenen Innentemperaturen und den erhaltenen Schätzungen der Innentemperatur repräsentativ ist, wobei jede Abweichung zu einem Zeitpunkt definiert wird, zu dem die gemessene Innentemperatur bestimmt wird, wenn der Ansteuerungsmodus ausgewählt wird, wobei der Vorhersagefehler von den vorgegebenen Parametern abhängig ist,
   - Mittel zum Bestimmen (210), für jeden der Ansteuerungsmodi, eines Satzes von optimalen Werten, der dem Ansteuerungsmodus zugeordnet ist, einen jedem vorgegebenen Parameter zugeordneten Wert umfasst und es ermöglicht, den Vorhersagefehler zu minimieren,
   - Mittel zum Bestimmen (301, 311), für jeden der Ansteuerungsmodi, einer dem Ansteuerungsmodus zugeordneten voraussichtlichen Sequenz, wobei die voraussichtliche Sequenz Schätzungen der Innentemperatur umfasst, die ausgehend von einem Anfangszeitpunkt $t_i$ nach dem Vorhersagemodell für die Innentemperatur berechnet werden, indem der dem Ansteuerungsmodus zugeordnete bestimmte Satz der optimalen Werte angewandt wird,
   - Mittel zum Bestimmen (303, 313), für jeden der Ansteuerungsmodi, eines dem Ansteuerungsmodus zugeordneten Komfortkriteriums, das für ein Komfortempfinden repräsentativ ist und eine Überschreitung eines minimalen Schwellenwerts einer Komforttemperatur und eines maximalen Schwellenwerts einer Komforttemperatur durch die Schätzungen der Innentemperatur der voraussichtlichen Sequenz repräsentiert,
   - Mittel zum Auswählen (321, 322) des Ansteuerungsmodus, bei dem das zugeordnete bestimmte Komfortkriterium für das größte Komfortempfinden (320) repräsentativ ist, **dadurch gekennzeichnet, dass** das Vorhersagemodell abhängig ist von einem ersten vorgegebenen Parameter $\Phi$, der für eine Phasenverschiebung kennzeichnend ist, von einem zweiten vorgegebenen Parameter $\varepsilon$, der einem Dämpfungsfaktor entspricht, wobei das Schätzen der Innentemperatur $T_{int\ estim}$ zu einem Zeitpunkt $t_n$, der zwischen dem Anfangszeitpunkt $t_i$

und einem Endzeitpunkt $t_f$ liegt, ausgehend von einem bekannten Wert der Innentemperatur $T_{int\,mes}$ zu dem Anfangszeitpunkt $t_i$, von einem bekannten oder geschätzten Wert der Außentemperatur $T_{ext}$ zu dem Anfangszeitpunkt $t_i$ und von einem voraussichtlichen Wert der Außentemperatur $T_{ext}$ zu dem Zeitpunkt $t_n$ erhalten wird gemäß:

$$T_{int\,estim}(t_n) = T_{int\,mes}(t_i) + \frac{\varepsilon \cdot T_{ext}(t_n + \Phi)}{T_{ext}(t_i)}.$$

9. Computerprogramm, das auf einem Medium gespeichert und/oder von einem Kommunikationsnetzwerk heruntergeladen werden kann, um von einem Prozessor gelesen zu werden, und **dadurch gekennzeichnet ist, dass** es Anweisungen umfasst, um das Verfahren nach einem der Ansprüche 1 bis 7 zu implementieren, wenn das Programm von dem Prozessor ausgeführt wird.

10. Medium zum Speichern von Informationen, das ein Computerprogramm nach dem vorhergehenden Anspruch speichert.

**Claims**

1. Method for selecting an operating mode of devices (111, 112, 113) for thermally regulating a building, from an accumulative first operating mode, configured to maximize external thermal inputs and minimize thermal losses, and a dissipative second operating mode, configured to minimize external thermal inputs and maximize thermal losses, each thermally regulating device being intended to regulate the temperature inside the building (10), called the interior temperature, the method being executed by a control unit (100) of the building (10) and comprising, for each of the operating modes:

   - obtaining (204) estimates of interior temperature in light of predefined parameters defined beforehand using a model for predicting interior temperature,
   - defining (206) a prediction error representative of discrepancies between measured (202) interior-temperature values and the obtained estimates of interior temperature, each discrepancy being defined at a time at which the measured interior temperature is determined when said operating mode is selected, the prediction error being dependent on the predefined parameters,
   - determining (210) a set of optimum values associated with said operating mode, containing one value associated with each predefined parameter, and allowing the prediction error to be minimized,
   - determining (301, 311) a prediction sequence associated with said operating mode, the prediction sequence containing estimates of interior temperature calculated, from an initial time $t_i$, using the model for predicting interior temperature and with application of the determined set of optimum values associated with the operating mode,
   - determining (303, 313) a comfort criterion associated with the operating mode, said comfort criterion being representative of a feeling of comfort and characterizing whether or not a minimum comfort-temperature threshold and a maximum comfort-temperature threshold are crossed by the estimates of interior temperature of the prediction sequence,
   the method further comprising:

   - selecting (321, 322) the operating mode for which the associated determined comfort criterion is representative of the greatest feeling of comfort (320),

   **characterized in that** the predicting model is dependent on a first predefined parameter $\Phi$, which is characteristic of a phase shift, and on a second predefined parameter $\varepsilon$ corresponding to a damping factor, the estimate of the internal temperature $T_{int\,estim}$ at a time $t_n$, located between the initial time $t_i$ and a final time $t_f$, being obtained on the basis of an interior-temperature value $T_{int\,mes}$ known at the initial time $t_i$, of an exterior-temperature value $T_{ext}$ known or estimated at the initial time $t_i$ and of a predicted exterior-temperature value $T_{ext}$ at time $t_n$, according to:

$$T_{int\,estim}(t_n) = T_{int\,mes}(t_i) + \frac{\varepsilon \cdot T_{ext}(t_n + \Phi)}{T_{ext}(t_i)}.$$

2. Method according to Claim 1, wherein determining (210) the set of optimum values of predefined parameters allowing the prediction error to be minimized comprises: considering the prediction error to be minimized when the prediction error is lower than a predefined criterion.

3. Method according to either of Claims 1 and 2, wherein the set of optimum values allowing the prediction error to be minimized is determined (210) via an optimization calculation based on an iterative optimization method or use of a genetic algorithm.

4. Method according to any of Claims 1 to 3, wherein the prediction error is a mean absolute error between the measured interior-temperature values $T_{int\,mes}(t)$ and the obtained estimates of interior temperature $T_{int\,estim}(t)$, and is written:

$$\sum_{t_i}^{t_f} \frac{|T_{int\,estim}(t) - T_{int\,mes}(t)|}{N}$$

where $N$ is the number of interior-temperature values $T_{int\,mes}(t)$ measured in the time interval $[t_i; t_f]$.

5. Method according to any of Claims 1 to 4, wherein the comfort criterion is a length of time between the initial time $t_i$ and a time at which the prediction sequence crosses the minimum or maximum comfort-temperature threshold for the first time.

6. Method according to any of Claims 1 to 4, wherein the comfort criterion is inversely proportional to an area between the line corresponding to the minimum or maximum comfort-temperature threshold that is crossed by the prediction sequence, and the curve representing the prediction sequence, between a start time $t_{deb}$ at which said comfort-temperature threshold is crossed, and an end time $t_{fin}$ at which said comfort-temperature threshold is crossed.

7. Method according to any of Claims 1 to 6, wherein each thermally regulating device is a passive device (111, 112, 113) that does not consume any power to heat or cool the building.

8. Device intended to select an operating mode of devices (111, 112, 113) for thermally regulating a building (10), from an accumulative first operating mode, configured to maximize external thermal inputs and minimize thermal losses, and a dissipative second operating mode, configured to minimize external thermal inputs and maximize thermal losses, each thermally regulating device (111, 112, 113) being intended to regulate the air temperature inside the building (10), called the interior temperature, the device being **characterized in that** it comprises:

- means for obtaining (204), for each of the operating modes, estimates of interior temperature in light of predefined parameters defined beforehand using a model for predicting interior temperature,
- means for defining (206), for each of the operating modes, a prediction error representative of discrepancies between measured interior-temperature values and the obtained estimates of interior temperature, each discrepancy being defined at a time at which the measured interior temperature is determined when said operating mode is selected, the prediction error being dependent on the predefined parameters,
- means for determining (210), for each of the operating modes, a set of optimum values associated with said operating mode, containing one value associated with each predefined parameter, and allowing the prediction error to be minimized,
- means for determining (301, 311), for each of the operating modes, a prediction sequence associated with said operating mode, the prediction sequence containing estimates of interior temperature calculated, from an initial time $t_i$, using the model for predicting interior temperature and with application of the determined set of optimum values associated with the operating mode,
- means for determining (303, 313), for each of the operating modes, a comfort criterion associated with the operating mode, said comfort criterion being representative of a feeling of comfort and characterizing whether or not a minimum comfort-temperature threshold and a maximum comfort-temperature threshold are crossed by the estimates of interior temperature of the prediction sequence,
- means for selecting (321, 322) the operating mode for which the associated determined comfort criterion is representative of the greatest feeling of comfort (320), **characterized in that** the predicting model is dependent on a first predefined parameter $\Phi$, which is characteristic of a phase shift, and on a second predefined parameter $\varepsilon$ corresponding to a damping factor, the estimate of the internal temperature $T_{int\,estim}$ at a time $t_n$, located between the initial time $t_i$ and a final time $t_f$, being obtained on the basis of an interior-temperature value $T_{int\,mes}$ known at the initial time $t_i$, of an exterior-temperature value $T_{ext}$ known or estimated at the initial time $t_i$ and of a predicted

exterior-temperature value $T_{ext}$ at time $t_n$, according to:

$$T_{int\ estim}(t_n) = T_{int\ mes}(t_i) + \frac{\varepsilon \cdot T_{ext}(t_n + \Phi)}{T_{ext}(t_i)}\ .$$

9.  Computer program able to be stored on a medium and/or downloaded from a communications network, in order to be read by a processor, and **characterized in that** it comprises instructions for implementing the method according to any of Claims 1 to 7, when said program is executed by the processor.

10. Medium for storing information, storing a computer program according to the preceding claim.

Fig. 1

Fig. 4

Démarrage de la phase d'apprentissage — 200

Choix d'un mode — 201

Obtenir des températures intérieures mesurées — 202

Obtenir des estimations de température intérieure en fonction de paramètres — 204

Définir une erreur de prévision — 206

Evaluer l'erreur de prévision pour différentes valeurs de chaque paramètre — 208

Déterminer l'ensemble de valeurs qui minimise l'erreur de prévision — 210

Autre mode ? — 212

Attente écoulement durée Pid ou instruction — 214

Fig. 2

```
┌─────────────────────────────────────────────┐
│        Démarrage de la phase de sélection     │  ⌐ 300
└─────────────────────────────────────────────┘
```

Démarrage de la phase de sélection — 300

Déterminer séquence prévisionnelle A de températures intérieures — 301

Déterminer séquence prévisionnelle D de températures intérieures — 311

Comparer la séquence prévisionnelle A aux seuils de température de confort — 302

Comparer la séquence prévisionnelle D aux seuils de température de confort — 312

Déterminer critère de confort A — 303

Déterminer critère de confort D — 313

Critère de confort A > critère de confort D ? — 320

Sélectionner mode A — 321

Sélectionner mode D — 322

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3015708 A1

**Littérature non-brevet citée dans la description**

- Particle Swarm Optimization Algorithms. Introduction to Nature-Inspired Optimization. 2017